# EUROPEAN PATENT SPECIFICATION

(11) **EP 3 825 881 B1**
(45) Date of publication and mention of the grant of the patent: **29.12.2021**
(21) Application number: 19306497.9
(22) Date of filing: 21.11.2019
(51) Int. Cl.: G06F 21/34, G06Q 20/34, G07F 7/10, G06F 21/77, G06F 21/51

(54) **MANAGING PERSONALISATION IN A DEVICE IMPLEMENTING A JAVA CARD ENVIRONMENT**
VERWALTUNG DER PERSONALISIERUNG IN EINER VORRICHTUNG, DIE EINE JAVA-KARTEN-UMGEBUNG IMPLEMENTIERT
GESTION DE LA PERSONNALISATION DANS UN DISPOSITIF IMPLÉMENTANT UN ENVIRONNEMENT JAVA CARD

(43) Date of publication of application: 26.05.2021
(73) Proprietor: IDEMIA France, 92400 Courbevoie (FR)
(72) Inventor: TRISNADI, Iwan, 92400 COURBEVOIE (FR); KURNIAWAN, Yosef Didik, 92400 COURBEVOIE (FR); PURWITO, Devina, 92400 COURBEVOIE (FR); NUGRAHA, Tedi Jombang, 92400 COURBEVOIE (FR)
(74) Representative: Cabinet Beau de Loménie

(56) References cited:
- EP-A1- 3 291 088
- EP-A1- 3 291 158
- JP-A- 2015 501 039
- US-A1- 2005 138 354
- US-A1- 2016 007 188
- US-A1- 2019 034 662

## Description

### Technical background

The present disclosure relates generally to the domain of applet management in a device and concerns more particularly management of applets in a device requiring a personalisation phase prior to use.

Many electronic devices implementing applets (or applications) require a personalisation phase for rendering operational these devices before use. Smartcards for instance generally undergo a personalisation process during or after manufacturing to create system files and initialise keys in their memory. A proper personalisation allows a smartcard or the like to be in an operational state. Various file structures may be created and various data may be stored during a personalisation process depending on the device at hand and the particular context. A tachograph device implementing a tachograph applet may for instance require a specific personalisation phase prior to operation during a use phase.

The personalisation code run by the device to perform a personalisation process is generally stored in a memory of the device and only used for the purpose of personalisation. This personalisation code includes personalisation instructions for creating a file structure and the like, therefore it is of no use once the personalisation is completed, i.e. during the use phase. Memory space is thus limited by the personalisation code present in the memory of the device, this being not desirable since memory management is often critical in terms of device performances.

In smartcards running a Java Card environment or the like, it is however an architecture constraint to keep the personalisation code in memory even after personalisation is completed. Such environments, especially secure ones, do not always provide easy and efficient mechanisms to remove part of a code.

In addition to memory management issues, the presence of personalisation code in the memory of a smartcard may give rise to security issues since this program code constitutes sensitive data that may be maliciously used or tampered with by a third party if not properly secured. An attacker may for instance create or modify illegitimately the file system or keys based on a personalisation code stored in a device.

There is thus a need for a solution allowing efficient and secure management of a personalisation code stored in the memory of a device requiring personalisation, including devices such as smartcards, tachograph devices or the like.

### Summary of the invention

The present invention relates to a method for managing a device implementing a Java Card environment, said device comprising an operational applet and a personalisation applet which are Java-based applications stored respectively in a first package and in a second package, said first and second packages being separated by Java Card firewalls, said method comprising:
- receiving, by the operational applet, at least one personalisation command and forwarding said at least one personalisation command to the personalisation applet;
- generating, by the personalisation applet, personalisation instructions by processing the at least one personalisation command;
- sending, by the personalisation applet, the personalisation instructions to the operational applet;
- performing, by the operational applet, a personalisation of the first package based on the personalisation instructions received from the personalisation applet, thereby rendering operational the operational applet by said device for performing at least one function;
- deleting, by a management applet of the device, the second package upon detection that the personalisation is completed.

Thanks to the present invention based on Java packages separated by firewalls, the second package can be easily erased while keeping the first package containing the operational applet. The operational applet can thus be rendered operational by performing a personalisation while gaining memory space and improving security. Thus, efficient and secure management of a personalisation code stored in the memory of a device requiring personalisation can be achieved, including in devices such as smartcards, tachograph devices or the like.

In a particular embodiment, the method comprises executing the operational applet once the personalisation is completed.

In a particular embodiment, said at least one personalisation command is received from a terminal external to said device.

In a particular embodiment, the management applet causes deletion of the second package in response to a deletion command from said external terminal.

In a particular embodiment, the operational applet and the personalisation applet communicate with each other using respective Java Card interfaces implemented in a third package separated from the first and second packages by Java Card firewalls.

In a particular embodiment, the method comprises, before the operational applet receives the personalisation command:
- storing said first, second and third packages in said device and forming Java Card firewalls separating each of said first, second and third packages,
   wherein said third package comprises:
- a first Java Card interface called by the operational applet to forward the at least one personalisation command to the personalisation applet;
- a second Java Card interface called by the personalisation applet to send the personalisation instructions to the operational applet; and
- a library of public classes accessed by the personalisation applet and by the operational applet.

In a particular embodiment, upon detecting that the personalisation is completed and that the second package is deleted, the operational applet is switched from a blocked state to a use state so that said at least one function can be performed; and wherein, in the use state, the operational applet ignores any command received through the second Java Card interface. In a particular embodiment, said at least one function is thus performed after the operational applet is switched to the use state.

In a particular embodiment, the personalisation comprises at least one of:
- creating one or a plurality of system files in the first package; and
- creating at least one key in the first package.

In a particular embodiment, the method comprises, before the operational applet receives the personalisation command, storing in said first package an application identifier of the personalisation applet; wherein, during said personalisation of the first package, the operational applet uses the application identifier of the personalisation applet to be authenticated by the personalisation applet prior to receiving said personalisation instructions.

In a particular embodiment, the device comprises an operating system which implements a Java Card environment, said operating system managing a current context associated with one of said packages,
the method comprising, before sending the personalisation instructions to the operational applet, receiving by the personalisation applet, from the operating system, the application identifier of the context immediately preceding a current context associated with the second package;
wherein the personalisation applet sends the personalisation instructions to the operational applet identified by the received application identifier.

In a particular embodiment, the operational applet is blocked after the personalisation is completed as long as the second package is not deleted.

In a particular embodiment of the invention, the various steps of the method according to the invention are specified by computer program instructions.

Accordingly, the invention also provides a computer program on a recording medium, this computer program being arranged to be implemented by a computer or a device such as a smartcard or the like, this computer program comprising instructions adapted for the implementation of a method as described in the present document.

The computer programs of the invention can be expressed in any programming language, and can be in the form of source code, object code, or any intermediary code between source code and object code, such that in a partially-compiled form, for instance, or in any other appropriate form.

The invention also provides a non-transitory recording medium readable by a computer or a device such as a smartcard or the like, this recording medium comprising computer program instructions as mentioned above.

The recording medium previously mentioned can be any entity or device capable of storing the computer program. For example, the recording medium can comprise a storing means, such as a ROM memory (a CD-ROM or a ROM implemented in a microelectronic circuit), or a magnetic storing means such as a floppy disk or a hard disk for instance.

The recording medium of the invention can correspond to a transmittable medium, such as an electrical or an optical signal, which can be conveyed via an electric or an optic cable, or by radio or any other appropriate means. The computer program according to the invention can in particular be downloaded from the Internet or a network of the like.

Alternatively, the recording medium can correspond to an integrated circuit in which a computer program is loaded, the circuit being adapted to execute or to be used in the execution of the methods of the invention.

The invention also relates to a device for carrying out the method of the present invention. In particular, the present invention relates to a device implementing a Java Card environment and comprising an operational applet and a personalisation applet which are Java-based applications stored respectively in a first package and in a second package, said first and second packages being separated by Java Card firewalls, wherein:
- the operational applet is configured to receive at least one personalisation command and to forward said at least one personalisation command to the personalisation applet;
- the personalisation applet is configured to generate personalisation instructions by processing the at least one personalisation command;
- the personalisation applet is configured to send the personalisation instructions to the operational applet; and
- the operational applet is configured to perform a personalisation of the first package based on the personalisation instructions received from the personalisation applet, thereby rendering operational for use the operational applet by said device;
   said device further comprising a management applet configured to delete the second package upon detection that the personalisation is completed.

The various embodiments and variants described in this document in relation with the method of the invention applies in an analogous manner to the device of the present invention, and conversely.

The invention further relates to a system comprising a device as defined in the present document for controlling said system. This system may be or comprise any one of: an electronic tachograph, an electronic passport and an electronic identity document.

While not explicitly described, the present embodiments may be employed in any combination or sub-combination.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth explicitly below.

### Brief description of the drawings

The invention including particular embodiments and advantages thereof will be described below in more detail, by way of example, with reference to the accompanying drawings:
- figure 1 is a schematic block diagram representing a system and a device according to a particular embodiment of the present invention;
- figure 2 is a flow chart illustrating the steps of a method for managing a device according to an embodiment of the present invention; and
- figure 3 is a flow chart illustrating the steps of a method for managing a device according to an embodiment of the present invention.

For simplicity and clarity of illustration, the same reference numerals will be used throughout the figures to refer to the same or like parts, unless indicated otherwise.

The components in the figures are not necessarily to scale, emphasis instead being placed upon illustrating the principles of the invention.

### Description of particular embodiments (of the invention)

While the present disclosure is susceptible of embodiment in many different forms, there are shown in the drawing and will be described herein in detail specific embodiments thereto with the understanding that the present disclosure is to be considered as an exemplification of the principles of the invention and is not intended to limit the disclosure to the specific embodiments illustrated. Instead, the scope of the invention is defined by the appended claims.

Numerous details are set forth to provide an understanding of the embodiments described herein. The exemplary embodiments may be practiced without these details. In other instances, well-known methods, procedures, and components have not been described in detail to avoid obscuring the embodiments described.

The invention provides, in various embodiments, a method for managing a device comprising an operational applet and a personalisation applet stored respectively in a first package and in a second package, wherein the first and second packages are separated by firewalls. Due to presence of firewalls therebetween, the operational applet and personalisation applet cannot transfer objects to each other, such as files or the like. The personalisation applet is thus configured to transmit instructions through the firewalls to the operational applet to cause the latter to perform a personalisation of the first package (more specifically of the operational applet). This personalisation, which can be of various natures, renders the operational applet operational for later use during a use phase. Once personalisation of the first package has been completed under control of the personalisation applet, the second package comprising the personalisation applet is deleted to save memory space and increase security of the device.

Thanks to the device's architecture based on packages separated by firewalls, it is possible to easily erase the second package while keeping the first package containing the operational applet. The operational applet can thus be rendered operational by performing a personalisation while gaining memory space and improving security. Thus, efficient and secure management of a personalisation code stored in the memory of a device requiring personalisation can be achieved, including in devices such as smartcards, tachograph devices or the like.

The invention also relates to a corresponding device, to a corresponding computer program and to a recording medium containing such a computer program.

The present invention is described herebelow in particular embodiments in the context of a smartcard implementing a Java Card environment (or Java Card platform). This smartcard may be used in any suitable application such as in a tachograph system for instance. Naturally, the invention is not restricted to such a particular environment and device. Environments similar or other than Java Card and devices similar or other than smartcards (e.g. computer or the like) may be considered and implemented in the present invention. The invention may also be implemented in a device or system other than a tachograph, as indicated further below.

In the present document, the Java Card environment and Java are defined by the Java Card standard (we may use Java Card v3.0.5 or any suitable version such as the latest version as for now version is v3.1; see for instance the "The Java Language Specification (https://docs.oracle.com/javase/specs/)").

A tachograph is a device configured to monitor activity of a vehicle (and/or of a driver's activity) and to record predefined parameters representative of this activity, such as speed, distance and the like.

In the particular embodiments described herebelow, an applet designates a Java application, that is, an applications defined in Java language. As mentioned earlier, implementations are however possible in environments other than in Java Card. More generally, any form of applications (or applets) suitable to run on the device of the invention may be implemented in the present invention.

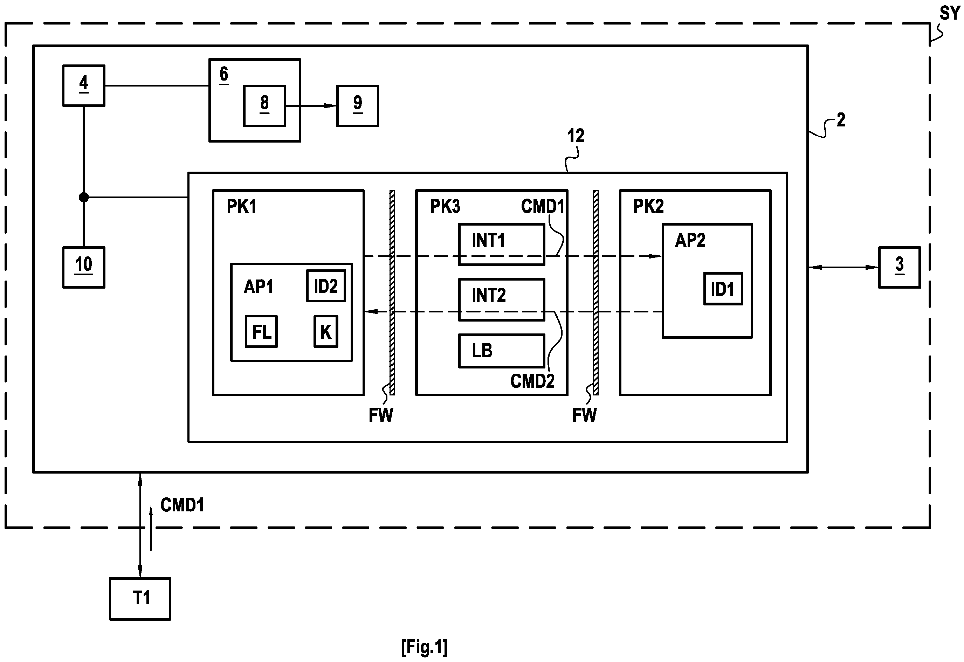

**Figure 1** depicts a system SY comprising a device 2 as part of a global system SY, according to a particular embodiment. It is assumed in this example that the system SY is a tachograph system further comprising a tachograph device 3 for recording parameters representative of a vehicle's activity, and the device 2 is considered to be a smartcard running a Java Card runtime environment (JCRE). The device 2 may however take other forms than a smart card.

As shown in **figure 1** in this example, the device 2 is configured to cooperate (or communicate) with the tachograph device 3 to perform one or more tachograph functions.

The device 2 is also configured to cooperate (or communicate) with an external terminal T1 (i.e. a server, or any suitable communication terminal or the like). In a particular example, the terminal T1 and the device 3 are one and same entity (in other words, the terminal T1 may be part of the device 3).

As discussed further below, the device 2 may receive one or more personalisation commands CMD1 from the terminal T. In this case, these commands CMD1 are of the APDU type (for "application protocol data unit"). In response to at least one personalisation command CMD1 received from the terminal T, the device 2 is configured to perform a personalisation (or personalisation phase), as described further below.

As depicted in **figure 1****,** the device 2 presents in this example the structure of a smartcard or the like. In particular, the device 2 comprises: a processor 4, a computer program 8 stored in a non-volatile memory 6, a RAM memory 10 and a rewritable non-volatile memory 12 (Flash, EEPROM or the like) suitable to store applets.

In the present example, the computer program 8 is an operating system OS run by the processor 4 to implement a Java Card Runtime Environment (JCRE). Other implementations are however possible. This operating system 8 comprises in particular a management applet 9 (also called management unit or card manager applet) implemented by the processor 4 under control of the operating system 8.

The non-volatile memory 6 (ROM, Flash or any other suitable non-volatile memory) constitutes a recording medium in accordance with a particular embodiment of the invention. The computer program 8 stored in the memory 6 comprises instructions to implement a method according to a particular embodiment of the invention. The steps of this method are described further below in particular embodiments.

As shown in **figure 1****,** the device 2 comprises an operational applet AP1 and a personalisation applet AP2 which are stored respectively in a first package PK1 and in a second package PK2, in the rewritable non-volatile memory 12. AP1 and AP2 are Java-based applications.

In the present document, a package designates a Java Card Package (or Java package) as defined in the Java Card standard.

The personalisation applet AP2 contained in the second package PK2 is configured to control a personalisation (or personalisation phase) which has to be carried out to render the device 2 operational.

The operational applet AP1 is configured to perform at least one function (other than personalisation) once personalisation has been completed. This function may be a tachograph function for instance, to control operation of the tachograph system SY. Other implementations are however possible.

As discussed further below, the operational applet AP1 may respond to personalisation instructions CMD2 received from the personalisation applet AP2, thereby personalising the first package PK1. Personalisation of the first package PK1 by the operational applet AP1 under control of the personalisation applet AP2 may comprise at least one of the following personalisation operations: creating a file structure FL (system files) in the operational applet AP1 and initialising keys K stored in the operational applet AP1.

In the present example, the memory 12 further stores a third Java Card package PK3 which contains a first communication interface INT1, a second communication interface INT2 and a library LB of public classes accessible by the operational applet AP1 and by the personalisation applet AP2.

The first package PK1, second package PK2 and third package PK3 are separated from each other in the memory 12 by firewalls FW (i.e. applet firewalls). These firewalls FW are Java Card firewalls conform with Java Card standard.

Due to the presence of these firewalls FW, the operational applet AP1 and the personalisation applet AP2 cannot transfer objects, such as files or the like, to each other. The personalisation applet AP2 is thus in the incapacity to perform itself the personalisation of the first operational applet AP1 (e.g. creating system files and/or initialising keys in the operational applet AP1).

The operational applet AP1 and personalisation applet AP2 are however configured to use respectively the applet interfaces INT1 and INT2 contained in the third package PK3 to communicate with each other through the firewalls FW.

These interfaces INT1 and INT2 are accessible interfaces stored in the third package PK3 and which can be used by the applets AP1, AP2 to communicate with each other so as to allow personalisation of the operational applet AP1. In the present example, these interfaces INT1 and INT2 are Java Card interfaces conform with Java Card standard. The Java Card interfaces INT1 and INT2 are based on the Java programming language. As is well-known to the skilled person, Java Card interfaces in general form an abstract type that is used to specify a behaviour that classes must implement.

As described further below, the personalisation applet AP2 may send personalisation instructions CMD2 to the operational applet AP1 by means of the interface INT2 through the firewalls FW. The operational applet AP1 may thus perform a personalisation based on these personalisation instructions CMD2. Conversely, the operational applet AP1 may forward one or more personalisation commands CMD1 received from terminal T1, to the personalisation applet AP2, by using the first interface INT1.

The personalisation applet AP2 is configured to process (e.g. analyse, parse, and/or decrypt etc.) the personalisation commands CMD1 provided by the terminal T1 while the operational applet AP1 is configured to perform personalisation of the operational applet AP1 in response to personalisation instructions received from the personalisation applet AP2. To this end, the personalisation applet AP2 contains an instruction code (in Java Card language in this example) that defines how the one or more personalisation commands CMD1 from the terminal T1 are to be processed, in particular to obtain the personalisation instructions CMD2.

Once the personalisation is achieved, the operational applet AP1 is rendered operational so that it can perform at least one function (e.g., a tachograph function or any suitable other function).

As also indicated further below, once the personalisation of the operational applet AP1 is completed, the management applet 9 is configured to delete the second package PK2 containing the personalisation applet AP2.

The public classes of the library LB stored in the third package PK3 comprise one or a plurality of functionalities (e.g. methods or the like) accessible by both the operational applet AP1 and the personalisation applet AP2. Both AP1 and AP2 may call functionalities from the library LB, either during the personalisation phase or, possibly, later during a use phase.

While the interfaces INT1, INT2 and the library LB are stored altogether in a same package PK3, it should be noted any one of these 3 elements (or all of them) may be stored in a distinct package in memory 12.

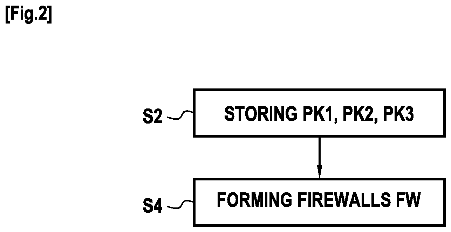

A particular embodiment of the invention is now described with respect to **figure 2****.** More particularly, the device 2 as described earlier with reference to **figure 1** implements a method by executing the computer program 8.

In a step S2, the first package PK1, second package PK2 and third package PK3 are stored in the rewritable non-volatile memory 12, and firewalls FW separating each of said first, second and third packages are formed (as shown in **figure 1**).

The first interface INT1 may be called by the operational applet AP1 to forward at least one personalisation command CMD1 received from the terminal T1, to the personalisation applet AP2. The second interface INT2 may be called by the personalisation applet AP2 to send personalisation instructions CMD2 to the operational applet AP1, as described further below.

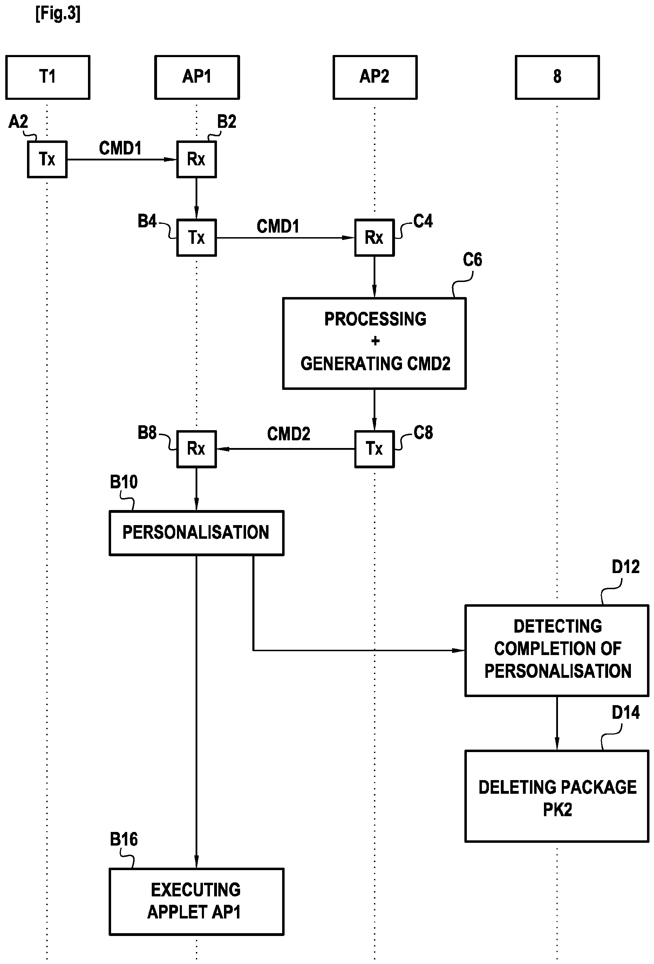

A particular embodiment of the invention is now described with respect to **figure 3****.** More particularly, the device 2 as described earlier with reference to **figure 1** implements a method by executing the computer program 8. It is assumed that the packages PK1-PK3 have already been stored (S2) and the firewalls FW have been formed (S4) in the memory 12 (**figures 1-2**).

In a sending step A2, the terminal T1 sends one or more personalisation commands CMD1 to the device 2. In the present example, it is assumed that the terminal T1 provides the device 2 with one personalisation command CMD1 only, although other examples with two or more personalisation commands CMD1 are possible. This personalisation command CMD1 is an APDU command.

The operational applet AP1 receives the personalisation command CMD1 in a receiving step B2. The operational applet AP1 does not comprise the personalisation code necessary to understand and process the personalisation command CMD1 in order to perform personalisation on its own.

Therefore, in a forwarding step B4, the operational applet AP1 forwards the personalisation command CMD1 to the personalisation applet AP2, without altering the content of the personalisation command CMD1. To this end, the operational applet AP1 calls the first interface INT1 in the third package PK3 to allow transmission of the command CMD1 through the firewalls FW to the personalisation applet AP2. More specifically, in the present example, one or more methods available in the first interface INT1 may be called by the operational applet AP1 to trigger transmission of the command CMD1 to the personalisation applet AP2. In this example, the operational applet AP2 does not use the APDU protocol. Therefore, the first interface INT1 called by the operational applet AP1 converts (B4) the format from APDU to another format which is recognised and can be processed by the personalisation applet AP2. By using the first interface INT1, the operation applet AP1 thus cause transmission of the personalisation command CMD1 in a new adapted format to the personalisation applet AP2 through the firewalls FW.

The personalisation applet AP2 receives the personalisation command CMD1 in a receiving step C4, and then generates (C6) personalisation instructions CMD2 by processing the received personalisation command CMD1. The processing C6 performed by the personalisation applet AP1 may vary depending on the context at hand and may for instance comprise at least one of:
- parsing the received personalisation command CMD1,
- decrypting the received personalisation command CMD1, and
- checking validity of this command CMD1, etc.

This processing C6 is possible because the personalisation applet AP2 comprises the personalisation code necessary to treat each personalisation command CMD1 transmitted by the terminal T1. The personalisation AP2 may for instance comprise one or more key necessary to decrypt the personalisation command CMD1 received (C4) from terminal T1 in an encrypted form.

In this example, the personalisation instructions CMD2 are different from the personalisation command CMD1 send by the terminal T1. The personalisation instructions CMD2 are generated by the personalisation applet AP2 so that it can be understood and processed by the operational applet AP1 to perform personalisation in the first package PK1. In particular, as indicated above, the personalisation instructions CMD2 may be obtained by decrypting the personalisation command CMD1, along with any other appropriate processing operations. During the processing step C6, the personalisation applet AP2 may call one or more functions (or methods) in the shareable library LB in the third package PK3.

In a sending step C8, the personalisation applet AP2 sends the generated personalisation instructions CMD2 to the operation applet AP1 to cause the latter to perform a personalisation phase in the first package PK1. To this end, the personalisation applet AP2 calls the second interface INT2 in the third package PK3 to allow transmission of the personalisation instructions CMD2 through the firewalls FW to the operational applet AP1. More specifically, one or more methods available in the second interface INT2 may be called by the personalisation applet AP2 to trigger transmission of the personalisation command CMD1 to the operational command. In this example, the personalisation applet does not use the APDU protocol.

The operational applet AP1 receives the personalisation instructions CMD2 from the personalisation applet AP2 in a receiving step B8 and then performs (B10) a personalisation of the first package PK1 (or, more particularly, of the operation applet AP1) based on the personalisation instructions CMD2 received from the personalisation applet AP2, thereby rendering operational the operational applet AP1. Once operational, the operation applet AP1 can perform at least one function, such as a tachograph function in this example. Other examples of functions are however possible.

The operational applet AP1 does not comprise the personalisation code and thus must perform personalisation under control of the personalisation applet AP2. The first and second interfaces INT1, INT2 allow communication between the applets AP1, AP2 during the personalisation phase. The personalisation applet AP2 instructs the operation applet AP1 specific operations to be performed (e.g. creation of files, initialisation of keys) for the purpose of personalisation. In response to the personalisation instructions CMD2, the operational applet AP1 may call one or more functions (or methods) in the shareable library LB in the third package PK3.

The personalisation B10 performed by the operational applet AP1 may comprise at least one of:
- creating one or a plurality of system files FL (or a file structure) in the first package PK1 (in the operational applet AP1 in this example); and
- creating at least one key in the first package PK1 (in the operational applet AP1 in this example).

This at least one key may be a public and/or private key usable by the operational applet AP1 in the Java Card Runtime Environment (JCRE), for instance to communicate with the tachograph device 3 after the personalisation.

As shown in **figure 3**, once the personalisation B10 is completed, the device 2 executes (B16) the operation applet AP1 which is now operational. During said execution B16, the operational applet AP1 may perform a predefined function, for instance a tachograph function in cooperation with the tachograph device 3. To this end, the operation applet AP1 comprises operational code to perform any suitable function, by using for instance the system files FL and the keys K (**figure 1**).

Further, upon detecting (D12, **figure 3****)** that the personalisation B10 is completed, the management applet 9 implemented by the operating system 8 deletes (D14) the second package PK2 containing the personalisation applet AP2.

Once the personalisation B10 is completed, the personalisation code contained in the personalisation applet AP2 is no longer of any use and can thus be erased to save memory space and limit security risks in case an attacker would attempt to use, modify and/or tamper in any way the personalisation code. Deletion of the personalisation applet AP2 can be achieved while keeping operational the operation applet AP1 because these two applets AP1, AP2 are contained in different packages separated by firewalls FW. Personalisation usually requires a large amount of code to perform all the necessary steps. A significant memory space can thus be gained and used after personalisation, i.e. during the use phase of the device 2.

In a particular embodiment, the management applet 9 causes deletion of the second package PK2 in response to an APDU deletion command received from the external terminal T1. In Java Card, applets such as the management applet 9 have not the capacity to delete other applets and packages. The terminal T1 may for instance determine when to send the APDU deletion command based on the one or more personalisation command CMD1 it has already send to the device 2. For instance, the terminal T1 comprises a list of the one or more personalization APDU commands CMD1 that need to be sent to the device 2. In response to each personalisation command CMD1 send to the device 2, the terminal T1 receives in return an acknowledgment message indicating that the command CMD1 has been successfully received by the device 2. Upon detecting that (1) all the personalisation APDU commands CMD1 have been send to the device 2 and that (2) an acknowledgement message has been received from the device 2 in response to each of the personalisation command CMD1, the terminal T1 determines that the personalisation phase is completed and thus sends an APDU deletion command to the device 2 to trigger deletion of the second package PK2 by the management applet 9.

In another example, the management applet 9 may be configured, upon detecting that the personalisation phase is completed, to send a notification to the terminal T1 to indicate completion of the personalisation. In response to this notification, the terminal T1 may then send an APDU deletion command to device 2 to trigger deletion of the second package PK2 by the management applet 9.

APDU communications to and from the management applet 9 may require to use a secure protocol. In such a case, the terminal T1 uses a predefined set of data (defining keys, protocol, etc.) to communicate via APDU messages with the management applet 9.

In the present embodiment, there is only one management applet 9 although other examples with multiple management applets are possible. Each management applet may have its own Security Domain in the mobile device 2. Each applet that is installed through a specific management applet will be in its security domain and may only be managed (e.g. deleted) by that specific management applet.

In a particular embodiment, the operational applet AP1 is configured to be blocked as long as the second package PK2 is not deleted, thereby improving even further security of the device 2. For instance, the management applet 9 may maintain the operational applet AP1 in a blocked state once the personalisation B10 is completed, and this as long as the second package PK2 has not been deleted. In a particular example, the operational applet AP1 is configured to stay in a blocked state after the personalisation B10 and, upon detection that the second package PK2 is deleted, it is configured to switch in a use state.

Once it is in the use state, the operation applet AP1 is operable to perform at least one predetermined function as already indicated (such as a tachograph function).

In a particular example, said at least one function is thus performed after the operational applet is switched to the use state.

In a particular example, upon detecting that the personalisation phase is completed, the terminal T1 may send a command to notify the operational applet AP1 that personalisation is completed. Additionally, upon receiving a deletion command from the terminal T1 to delete the personalisation applet AP2 (or more generally the second package PK2), the management applet 9 may notify the personalisation applet AP2 that it is about to be deleted. In response to this notification from the management applet 9, the personalisation applet AP2 sends a command to the operation applet AP1 to request the latter to switch from a blocked state to a use state. If the operational applet AP1 has been notified that the personalisation is completed, it will then change its state to the use state. If not, the operational applet AP1 will remain in the blocked state. In other words, the two conditions (1) receiving a specific command from AP2 and (2) being notified of personalisation completion by the terminal T1 must be met to allow the state of the operational applet AP1 to switch from a blocked state to a use state, thereby improving even further security. Once the operational applet has switched in the use state, the terminal T1 may cause deletion of the second package PK2, as already described.

In a particular embodiment, after the operational applet AP1 has switched to the use state, it is configured to ignore any command received through the second interface INT2. At this stage, the second package PK2 should be deleted. Thus, if any command is received via the interface INT2 (normally used by the personalisation applet AP2), it is considered a false command, thereby enhancing even further security.

In a particular embodiment, the method described earlier with respect to **figure 3** comprises, before the operational applet AP1 receives the personalisation command CMD1, a step of storing in the first package PK1 (e.g. in the operational applet AP1) an application identifier (or code) ID2 associated with the personalisation applet AP2 (see **figure 1****).** Storing of this identifier ID2 can be done during a pre-personalisation phase of the device 2. During the personalisation B10 of the first package PK1 (or of the operational applet AP1), the operational applet AP1 may thus use the application identifier ID2 of the personalisation applet AP2 to communicate with the personalisation applet AP2 during the personalisation phase.

In particular, the operational applet AP1 may authenticate the personalisation applet AP2 prior to receiving (B8, **figure 3****)** the personalisation instructions CMD2 from said personalisation applet AP2. To this end, the personalisation applet AP2 may transmit its identifier to the operational applet AP1 so that the latter can compare the received identifier with the identifier ID2 pre-stored in the operational applet AP1. The operational applet AP1 then performs the personalisation B10 according to the personalisation instructions CMD2 only if the authentication of the personalisation applet AP2 based on the identifier ID2 is successful. Security of the device 2 can thus be enhanced since personalisation is blocked by the operational applet AP1 if the authentication of the personalisation applet AP2 fails, thereby limiting the risks that an attacker runs a malicious personalisation applet in the device 2.

In a particular embodiment, to ensure that the operation applet AP1 receives personalisation instructions CMD2 from the genuine personalisation applet AP2, a security process is performed as described hereafter. Namely, the operation application AP1 defines one or more personalisation object references noted RF. As described below, a personalisation object reference RF is a Java Object reference used by the operation applet AP1 to create file systems, keys, and/or other personalization objects. Upon receiving a personalisation command CMD1 from the terminal T1, the operational applet AP1 forwards (B4, **figure 3****)** to the personalisation applet AP2, via the interface INT1, the command CMD1 along with (or inserted therein) the previously defined personalisation object references RF. In other words, the personalisation object references are send as parameters of the personalisation command CMD1 to the personalisation applet AP2. The personalisation applet AP2 then processes the received personalisation command CMD1 and sends back personalisation instructions CMD2 to the operational applet AP1 as previously described (C8, **figure 3**), except that it sends along (possibly inserted as parameters within the personalisation instructions CMD2) the same object references RF. The operational applet AP1 performs personalisation according to the received personalisation instructions and object references RF. In particular, the operation applet AP1 may use the received object references RF to create file systems, keys and/or other personalisation objects during the personalisation phase. If the operational applet AP1 is not the owner of (i.e. does not originate from) the received personalisation object references RF, the latter is not capable of creating the desired personalisation objects. In Java Card, to be able to create an object, the reference used has to belong to the applets at hand. More particularly, a Java card applet cannot access object references owned by other applets. Thus, it cannot do anything related to the object references; including using it to create personalisation objects (key, files).

The above embodiment allows preventing an attacker from feeding malicious information to the operational applet AP1 (e.g. attacker keys). If an attacker replaces the personalisation applet AP2 with a false applet, the false personalisation instructions CMD2 send by the false applet will reach the operational applet AP1 but the operational AP1 is unable to create the personalisation objects without the proper (Java Objet) personalisation object references.

In a particular embodiment, for each personalisation command CMD1 received (B2, **figure 3****)** from the terminal T1, the operational applet AP1 inserts therein an identifier ID1 identifying said operation applet AP1 before forwarding it (step B4, **figure 3****)** to the personalisation applet AP2. Upon receiving a personalisation command CMD1 from the operation applet AP1, the personalisation applet AP2 compares the identifier ID1 received in the personalisation command CMD1 with a predefined identifier ID1 which is pre-stored in the personalisation applet AP2. If there is a match, the received personalisation command is authenticated successfully and processed (C6) as already described earlier. Security of the device 2 can thus be enhanced since processing of the personalisation command CMD1 is blocked by the personalisation applet AP2 if the authentication of the personalisation applet AP2 fails, thereby limiting the risks that an attacker runs a malicious personalisation applet in the device 2.

As defined in the Java Card standard, a Java Card platform is a secure multi-application environment where applets can safely coexist in a same device. Each applet is assigned to an execution context (also called context) that controls access to the objects assigned to it. The boundary between one execution context and another is called an applet firewall. It is a Java Card runtime enhancement of the Java security concept of a sandbox, which combines the functionality of the class loader (java.ClassLoader) and the access controller (java.AccessController). The Java Card firewall creates a virtual heap such that an object can access (public) methods and data of only those objects that are within the same firewall. A firewall may contain a number of applets and other objects, such as common secret keys. A Java Card execution context currently has package scope. When each object is created, it is assigned to the execution context of the caller.

In a particular embodiment, the operating system 8 of the device 2 implements a Java Card environment (or Java Card platform) and it manages (or monitors) a current context associated with one of the packages PK1-PK3, that is, a package being currently active in the JCRE. In the present embodiment, each package PK1-PK3 can be associated with a context which is monitored by the operating system 8. The operating system 8 may keep in memory an identifier of a current context, i.e. a context currently being processed in the JCRE by the operating system 8. This context thus changes over time and can be managed and monitored by the operating system 8. For instance, in the present embodiment, when the operation applet AP1 forwards (B4) the personalisation command CMD1 to the personalisation applet AP2, the operating system 6 may record an identifier of the first package PK1 as being representative of the current context. Likewise, when the personalisation applet AP2 processes (C6) the personalisation command CMD1 to generate the personalisation instructions CMD2, the operating system 8 may record an identifier of the second package PK2 as being representative of the current context. The device 2 can thus use the context identifiers stored by the operating system 8 over time to verify whether the personalisation command CMD1 received (C4) by the personalisation applet AP2 effectively originates from the legitimate source, i.e. the first package PK1.

More specifically, in a particular example, after receiving (C4) the personalisation command CMD1 and before sending (C8, **figure 3****)** the personalisation instructions CMD2 to the operational applet AP1, the personalisation applet AP2 receives from the operating system 8 an application identifier ID2 (**figure 1**) of the context immediately preceding the current context associated with the second package PK2. This identifier ID2 may be received in response to a request previously send by the personalisation applet AP2 to the operating system 8. The personalisation applet AP2 then sends (C8) the personalisation instructions CMD2 to the operational applet AP1 identified by the received application identifier ID2. This forces the personalisation applet AP2 to send the personalisation instructions CMD2 to the genuine operational applet AP1, even in a case where an attacker has created a false operational applet for the purpose of retrieving the personalisation instructions CMD2. The personalisation applet AP2 is required to respond to the operational applet AP1 from which originates the personalisation command CMD1. In this particular embodiment, the personalisation applet AP2 thus uses the identifier of the context immediately preceding the current context to determine the applet to which the personalisation instructions CMD2 are to be send back. In case an attacker creates a fake operational applet, the personalisation applet AP2 sends back the personalisation instructions to the fake operational applet instead of sending it to the genuine operational applet AP1.

In a particular example, the device 2 is configured to control the system SY. This system SY may be, for instance, any one of: an electronic tachograph, an electronic passport, and an electronic identity document.

This invention having been described in particular embodiments, it is clear that it is susceptible to numerous modifications and embodiments within the ability of those skilled in the art and without the exercise of the inventive faculty. Accordingly, the scope of the invention is defined by the scope of the following claims. While not explicitly described, the present embodiments may be employed in any combination or sub-combination thereof.

The flowchart and/or block diagrams in the figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s).

## Claims

1. A method for managing a device (2) implementing a Java Card environment, said device comprising an operational applet (AP1) and a personalisation applet (AP2) which are Java-based applications stored respectively in a first package (PK1) and in a second package (PK2), said first and second packages being separated by Java Card firewalls (FW), said method comprising:
- receiving (B2), by the operational applet, at least one personalisation command (CMD1) and forwarding (B4) said at least one personalisation command to the personalisation applet;
- generating (C6), by the personalisation applet, personalisation instructions (CMD2) by processing the at least one personalisation command;
- sending (C8), by the personalisation applet, the personalisation instructions (CMD2) to the operational applet;
- performing (B10), by the operational applet, a personalisation of the first package (PK1) based on the personalisation instructions (CMD2) received from the personalisation applet, thereby rendering operational the operational applet (AP1) by said device for performing at least one function; and
- deleting (D12), by a management applet (9) of the device, the second package (PK2) upon detection that the personalisation is completed,
wherein the operational applet (AP1) and the personalisation applet (AP2) communicate with each other using respective Java Card interfaces implemented in a third package separated from the first and second packages by Java Card firewalls,
wherein the method comprises, before the operational applet receives the personalisation command:
- storing (S2) said first, second and third packages in said device and forming Java Card firewalls separating each of said first, second and third packages,
wherein said third package comprises:
- a first Java Card interface (INT1) called by the operational applet (AP1) to forward the at least one personalisation command (CMD1) to the personalisation applet;
- a second Java Card interface (INT2) called by the personalisation applet (AP2) to send the personalisation instructions (CMD2) to the operational applet; and
- a library (LB) of public classes accessed by the personalisation applet and by the operational applet.

2. Method according to claim 1, comprising executing the operational applet (AP1) once the personalisation is completed.

3. Method according to claim 1 or 2, wherein said at least one personalisation command (CMD1) is received from a terminal external to said device.

4. Method according to any one of claims 1 to 3, wherein the management applet (9) causes deletion of the second package (PK2) in response to a deletion command from said external terminal.

5. Method according to any one of claims 1 to 4, wherein upon detecting that the personalisation is completed and that the second package is deleted, the operational applet (AP1) is switched from a blocked state to a use state so that said at least one function can be performed; and
wherein, in the use state, the operational applet ignores any command received through the second Java Card interface.

6. Method according to any one of claims 1 to 5, wherein the personalisation comprises at least one of:
- creating one or a plurality of system files in the first package (PK1); and
- creating at least one key in the first package (PK1).

7. Method according to any one of claims 1 to 6, wherein the method comprises, before the operational applet receives the personalisation command, storing in said first package an application identifier of the personalisation applet;
wherein, during said personalisation of the first package, the operational applet (AP1) uses the application identifier of the personalisation applet to be authenticated by the personalisation applet prior to receiving said personalisation instructions.

8. Method according to any one of claims 1 to 7, wherein the device comprises an operating system (6) which implements a Java Card environment, said operating system managing a current context associated with one of said packages,
the method comprising, before sending the personalisation instructions to the operational applet (AP1), receiving by the personalisation applet (AP2), from the operating system, the application identifier of the context immediately preceding a current context associated with the second package;
wherein the personalisation applet (AP2) sends the personalisation instructions (CMD2) to the operational applet identified by the received application identifier.

9. Method according to any one of claims 1 to 8, wherein the operational applet (AP1) is blocked after the personalisation is completed as long as the second package (PK2) is not deleted.

10. A computer program (8) including instructions for executing the steps of a method according to any one of claims 1 to 9 when said program is executed by a device (2) implementing a Java Card environment.

11. A recording medium (6) readable by a computing device (2) implementing a Java Card environment and having recorded thereon a computer program including instructions, which when read by said device, execute the steps of a method according to any one of claims 1 to 9.

12. A device (2) implementing a Java Card environment and comprising an operational applet (AP1) and a personalisation applet (AP2) which are Java-based applications stored respectively in a first package (PK1) and in a second package (PK2), said first and second packages being separated by Java Card firewalls, wherein:
- the operational applet is configured to receive at least one personalisation command (CMD1) and to forward said at least one personalisation command to the personalisation applet;
- the personalisation applet is configured to generate personalisation instructions (CMD2) by processing the at least one personalisation command;
- the personalisation applet is configured to send the personalisation instructions (CMD2) to the operational applet; and
- the operational applet is configured to perform a personalisation of the first package based on the personalisation instructions received from the personalisation applet, thereby rendering operational for use the operational applet by said device;
said device further comprising a management applet (9) configured to delete the second package upon detection that the personalisation is completed,
wherein the operational applet (AP1) and the personalisation applet (AP2) are configured to communicate with each other using respective Java Card interfaces implemented in a third package separated from the first and second packages by Java Card firewalls,
wherein the device is configured to, before the operational applet receives the personalisation command, store said first, second and third packages and form Java Card firewalls separating each of said first, second and third packages,
wherein said third package comprises:
- a first Java Card interface (INT1) called by the operational applet (AP1) to forward the at least one personalisation command (CMD1) to the personalisation applet;
- a second Java Card interface (INT2) called by the personalisation applet (AP2) to send the personalisation instructions (CMD2) to the operational applet; and
- a library (LB) of public classes accessed by the personalisation applet and by the operational applet.

13. A system comprising a device according to claim 12 for controlling the system, said system being any one of:
- an electronic tachograph;
- an electronic passport; and
- an electronic identity document.

## Patentansprüche

1. Verfahren zum Verwalten einer Vorrichtung (2), die eine Java-Card-Umgebung implementiert, wobei die Vorrichtung ein Betriebs-Applet (AP1) und ein Personalisierungs-Applet (AP2) umfasst, die Java-basierte Anwendungen sind, die in einem ersten Paket (PK1) beziehungsweise in einem zweiten Paket (PK2) gespeichert sind, wobei das erste und das zweite Paket durch Java-Card-Firewalls (FW) getrennt sind, wobei das Verfahren umfasst:
- Empfangen (B2), durch das Betriebs-Applet, mindestens eines Personalisierungsbefehls (CMD1) und Weiterleiten (B4) des mindestens einen Personalisierungsbefehls an das Personalisierungs-Applet,
- Erzeugen (C6), durch das Personalisierungs-Applet, von Personalisierungsanweisungen (CMD2) durch Verarbeiten des mindestens einen Personalisierungsbefehls,
- Senden (C8), durch das Personalisierungs-Applet, der Personalisierungsanweisungen (CMD2) an das Betriebs-Applet,
- Durchführen (B10), durch das Betriebs-Applet, einer Personalisierung des ersten Pakets (PK1) basierend auf den von dem Personalisierungs-Applet empfangenen Personalisierungsanweisungen (CMD2), wodurch das Betriebs-Applet (AP1) durch die Vorrichtung zum Durchführen mindestens einer Funktion betriebsfähig gemacht wird, und
- Löschen (D12), durch ein Verwaltungs-Applet (9) der Vorrichtung, des zweiten Pakets (PK2) bei der Feststellung, dass die Personalisierung abgeschlossen ist,
wobei das Betriebs-Applet (AP1) und das Personalisierungs-Applet (AP2) miteinander unter Verwendung jeweiliger Java-Card-Schnittstellen kommunizieren, die in einem dritten Paket implementiert werden, das durch Java-Card-Firewalls von dem ersten und zweiten Paket getrennt ist,
wobei das Verfahren, bevor das Betriebs-Applet den Personalisierungsbefehl empfängt, umfasst:
- Speichern (S2) des ersten, zweiten und dritten Pakets in der Vorrichtung und Bilden von Java-Card-Firewalls, die jedes von dem ersten, zweiten und dritten Paket trennen,
wobei das dritte Paket umfasst:
- eine erste Java-Card-Schnittstelle (INT1), die durch das Betriebs-Applet (AP1) aufgerufen wird, um den mindestens einen Personalisierungsbefehl (CMD1) an das Personalisierungs-Applet weiterzuleiten,
- eine zweite Java-Card-Schnittstelle (INT2), die durch das Personalisierungs-Applet (AP2) aufgerufen wird, um die Personalisierungsanweisungen (CMD2) an das Betriebs-Applet zu senden, und
- eine Bibliothek (LB) öffentlicher Klassen, auf die durch das Personalisierungs-Applet und durch das Betriebs-Applet zugegriffen wird.

2. Verfahren nach Anspruch 1, welches das Ausführen des Betriebs-Applets (AP1) umfasst, nachdem die Personalisierung abgeschlossen wurde.

3. Verfahren nach Anspruch 1 oder 2, wobei der mindestens eine Personalisierungsbefehl (CMD1) von einem Endgerät außerhalb der Vorrichtung empfangen wird.

4. Verfahren nach einem der Ansprüche 1 bis 3, wobei das Verwaltungs-Applet (9) als Reaktion auf einen Löschungsbefehl von dem externen Endgerät die Löschung des zweiten Pakets (PK2) bewirkt.

5. Verfahren nach einem der Ansprüche 1 bis 4, wobei beim Feststellen, dass die Personalisierung abgeschlossen ist und dass das zweite Paket gelöscht ist, das Betriebs-Applet (AP1) von einem gesperrten Zustand in einen Verwendungszustand geschaltet wird, derart, dass mindestens eine Funktion durchgeführt werden kann, und
wobei das Betriebs-Applet in dem Verwendungszustand einen beliebigen durch die zweite Java-Card-Schnittstelle empfangenen Befehl ignoriert.

6. Verfahren nach einem der Ansprüche 1 bis 5, wobei die Personalisierung mindestens eines umfasst von:
- Erzeugen einer oder mehrerer Systemdateien in dem ersten Paket (PK1) und
- Erzeugen mindestens eines Schlüssels in dem ersten Paket (PK1).

7. Verfahren nach einem der Ansprüche 1 bis 6, wobei das Verfahren, bevor das Betriebs-Applet den Personalisierungsbefehl empfängt, das Speichern einer Anwendungskennung des Personalisierungs-Applets in dem ersten Paket umfasst,
wobei während der Personalisierung des ersten Pakets das Betriebs-Applet (AP1) die Anwendungskennung des Personalisierungs-Applets verwendet, um durch das Personalisierungs-Applet vor dem Empfangen der Personalisierungsanweisungen authentifiziert zu werden.

8. Verfahren nach einem der Ansprüche 1 bis 7, wobei die Vorrichtung ein Betriebssystem (6) umfasst, das eine Java-Card-Umgebung implementiert, wobei das Betriebssystem einen gegenwärtigen Kontext verwaltet, der mit einem der Pakete verbunden ist,
wobei das Verfahren vor dem Senden der Personalisierungsanweisungen an das Betriebs-Applet (AP1) das Empfangen der Anwendungskennung des Kontexts, der einem gegenwärtigen Kontext, der mit dem zweiten Paket verbunden ist, unmittelbar vorausgeht, durch das Personalisierungs-Applet (AP2) von dem Betriebssystem umfasst,
wobei das Personalisierungs-Applet (AP2) die Personalisierungsanweisungen (CMD2) an das durch die empfangene Anwendungskennung identifizierte Betriebs-Applet sendet.

9. Verfahren nach einem der Ansprüche 1 bis 8, wobei das Betriebs-Applet (AP1) nach dem Abschluss der Personalisierung gesperrt wird, solange das zweite Paket (PK2) nicht gelöscht ist.

10. Computerprogramm (8), das Anweisungen zum Ausführen der Schritte eines Verfahrens nach einem der Ansprüche 1 bis 9 beinhaltet, wenn das Programm durch eine Vorrichtung (2) ausgeführt wird, die eine Java-Card-Umgebung implementiert.

11. Aufzeichnungsmedium (6), das durch eine Rechenvorrichtung (2) lesbar ist, die eine Java-Card-Umgebung implementiert und darauf aufgezeichnet ein Computerprogramm aufweist, das Anweisungen beinhaltet, die, wenn sie durch die Vorrichtung gelesen werden, die Schritte eines Verfahrens nach einem der Ansprüche 1 bis 9 ausführen.

12. Vorrichtung (12), die eine Java-Card-Umgebung implementiert und ein Betriebs-Applet (AP1) und ein Personalisierungs-Applet (AP2) umfasst, die Java-basierte Anwendungen sind, die in einem ersten Paket (PK1) beziehungsweise in einem zweiten Paket (PK2) gespeichert sind, wobei das erste und zweite Paket durch Java-Card-Firewalls getrennt sind, wobei:
- das Betriebs-Applet dazu ausgestaltet ist, mindestens einen Personalisierungsbefehl (CMD1) zu empfangen und den mindestens einen Personalisierungsbefehl an das Personalisierungs-Applet weiterzuleiten,
- das Personalisierungs-Applet dazu ausgestaltet ist, Personalisierungsanweisungen (CMD2) durch Verarbeiten des mindestens einen Personalisierungsbefehls zu erzeugen,
- das Personalisierungs-Applet dazu ausgestaltet ist, die Personalisierungsanweisungen (CMD2) an das Betriebs-Applet zu senden, und
- das Betriebs-Applet dazu ausgestaltet ist, eine Personalisierung des ersten Pakets basierend auf den von dem Personalisierungs-Applet empfangenen Personalisierungsanweisungen durchzuführen, wodurch es zur Verwendung des Betriebs-Applets durch die Vorrichtung betriebsfähig gemacht wird,
die Vorrichtung ferner ein Verwaltungs-Applet (9) umfasst, das dazu ausgestaltet ist, das zweite Paket bei der Feststellung, dass die Personalisierung abgeschlossen ist, zu löschen,
wobei das Betriebs-Applet (AP1) und das Personalisierungs-Applet (AP2) dazu ausgestaltet sind, miteinander unter Verwendung entsprechender Java-Card-Schnittstellen zu kommunizieren, die in einem dritten Paket implementiert sind, das von dem ersten und zweiten Paket durch Java-Card-Firewalls getrennt ist,
wobei die Vorrichtung dazu ausgestaltet ist, bevor das Betriebs-Applet den Personalisierungsbefehl empfängt, das erste, zweite und dritte Paket zu speichern und Java-Card-Firewalls zu bilden, die jedes von dem ersten, zweiten und dritten Paket trennen,
wobei das dritte Paket umfasst:
- eine erste Java-Card-Schnittstelle (INT1), die durch das Betriebs-Applet (AP1) aufgerufen wird, um den mindestens einen Personalisierungsbefehl (CMD1) an das Personalisierungs-Applet weiterzuleiten,
- eine zweite Java-Card-Schnittstelle (INT2), die durch das Personalisierungs-Applet (AP2) aufgerufen wird, um die Personalisierungsanweisungen (CMD2) an das Betriebs-Applet zu senden, und
- eine Bibliothek (LB) öffentlicher Klassen, auf die durch das Personalisierungs-Applet und durch das Betriebs-Applet zugegriffen wird.

13. System, das eine Vorrichtung nach Anspruch 12 zum Steuern des Systems umfasst, wobei das System eines ist von:
- einem elektronischen Fahrtenschreiber,
- einem elektronischen Pass und
- einem elektronischen Identitätsdokument.

## Revendications

1. Procédé de gestion d'un dispositif (2) mettant en œuvre un environnement Java Card, ledit dispositif comprenant une applet opérationnelle (AP1) et une applet de personnalisation (AP2) qui sont des applications basées sur Java stockées respectivement dans un premier ensemble (PK1) et dans un deuxième ensemble (PK2), lesdits premier et deuxième ensembles étant séparés par des pare-feux Java Card (FW), ledit procédé comprenant :
- la réception (B2), par l'applet opérationnelle, d'au moins une commande de personnalisation (CMD1) et la transmission (B4) de ladite au moins une commande de personnalisation à l'applet de personnalisation ;
- la génération (C6), par l'applet de personnalisation, des instructions de personnalisation (CMD2) par le traitement de l'au moins une commande de personnalisation ;
- l'envoi (C8), par l'applet de personnalisation, des instructions de personnalisation (CMD2) à l'applet opérationnelle ;
- la réalisation (B10), par l'applet opérationnelle, d'une personnalisation du premier ensemble (PK1) sur la base des instructions de personnalisation (CMD2) reçues de l'applet de personnalisation, rendant de ce fait opérationnelle l'applet opérationnelle (AP1) par ledit dispositif pour exécuter au moins une fonction ; et
- la suppression (D12), par une applet de gestion (9) du dispositif, du deuxième ensemble (PK2) lorsqu'il est détecté que la personnalisation est terminée,
dans lequel l'applet opérationnelle (AP1) et l'applet de personnalisation (AP2) communiquent entre elles à l'aide d'interfaces Java Card respectives mises en œuvre dans un troisième ensemble séparé des premier et deuxième ensembles par des pare-feux Java Card,
dans lequel le procédé comprend, avant que l'applet opérationnelle ne reçoive la commande de personnalisation :
- le stockage (S2) desdits premier, deuxième et troisième ensembles dans ledit dispositif et la formation des pare-feux Java Card séparant chacun desdits premier, deuxième et troisième ensembles,
dans lequel ledit troisième ensemble comprend :
- une première interface Java Card (INT1) appelée par l'applet opérationnelle (AP1) pour transmettre l'au moins une commande de personnalisation (CMD1) à l'applet de personnalisation ;
- une deuxième interface Java Card (INT2) appelée par l'applet de personnalisation (AP2) pour envoyer les instructions de personnalisation (CMD2) à l'applet opérationnelle ; et
- une bibliothèque (LB) de cours publics accessibles par l'applet de personnalisation et par l'applet opérationnelle.

2. Procédé selon la revendication 1, comprenant l'exécution de l'applet opérationnelle (AP1) une fois la personnalisation terminée.

3. Procédé selon la revendication 1 ou 2, dans lequel ladite au moins une commande de personnalisation (CMD1) est reçue d'un terminal externe audit dispositif.

4. Procédé selon l'une quelconque des revendications 1 à 3, dans lequel l'applet de gestion (9) provoque la suppression du deuxième ensemble (PK2) en réponse à une commande de suppression à partir dudit terminal externe.

5. Procédé selon l'une quelconque des revendications 1 à 4, dans lequel lorsqu'il est détecté que la personnalisation est terminée et que le deuxième ensemble est supprimé, l'applet opérationnelle (AP1) passe d'un état bloqué à un état d'utilisation de sorte que ladite au moins une fonction peut être exécutée ; et
dans lequel, dans l'état d'utilisation, l'applet opérationnelle ignore toute commande reçue via la deuxième interface Java Card.

6. Procédé selon l'une quelconque des revendications 1 à 5, dans lequel la personnalisation comprend au moins l'une parmi :
- la création d'un ou plusieurs fichier(s) système dans le premier ensemble (PK1) ; et
- la création d'au moins une clé dans le premier ensemble (PK1).

7. Procédé selon l'une quelconque des revendications 1 à 6, dans lequel le procédé comprend, avant que l'applet opérationnelle ne reçoive la commande de personnalisation, le stockage dans ledit premier ensemble d'un identifiant d'application de l'applet de personnalisation ;
dans lequel, lors de ladite personnalisation du premier ensemble, l'applet opérationnelle (AP1) utilise l'identifiant d'application de l'applet de personnalisation à authentifier par l'applet de personnalisation avant de recevoir lesdites instructions de personnalisation.

8. Procédé selon l'une quelconque des revendications 1 à 7, dans lequel le dispositif comprend un système d'exploitation (6) qui met en œuvre un environnement Java Card, ledit système d'exploitation gérant un contexte courant associé à l'un desdits ensembles,
le procédé comprenant, avant l'envoi des instructions de personnalisation à l'applet opérationnelle (AP1), la réception par l'applet de personnalisation (AP2), à partir du système d'exploitation, de l'identifiant d'application du contexte précédant immédiatement un contexte courant associé au deuxième ensemble ;
dans lequel l'applet de personnalisation (AP2) envoie les instructions de personnalisation (CMD2) à l'applet opérationnelle identifiée par l'identifiant d'application reçu.

9. Procédé selon l'une quelconque des revendications 1 à 8, dans lequel l'applet opérationnelle (AP1) est bloquée une fois la personnalisation terminée tant que le deuxième ensemble (PK2) n'est pas supprimé.

10. Programme d'ordinateur (8) comportant des instructions d'exécution des étapes d'un procédé selon l'une quelconque des revendications 1 à 9 lorsque ledit programme est exécuté par un dispositif (2) mettant en œuvre un environnement Java Card.

11. Support d'enregistrement (6) lisible par un dispositif informatique (2) mettant en œuvre un environnement Java Card et sur lequel est enregistré un programme informatique comportant des instructions qui, lorsqu'elles sont lues par ledit dispositif, exécutent les étapes d'un procédé selon l'une quelconque des revendications 1 à 9.

12. Dispositif (2) mettant en œuvre un environnement Java Card et comprenant une applet opérationnelle (AP1) et une applet de personnalisation (AP2) qui sont des applications basées sur Java stockées respectivement dans un premier ensemble (PK1) et dans un deuxième ensemble (PK2), lesdits premier et deuxième ensembles étant séparés par des pare-feux Java Card, dans lequel :
- l'applet opérationnelle est configurée pour recevoir au moins une commande de personnalisation (CMD1) et pour transmettre ladite au moins une commande de personnalisation à l'applet de personnalisation ;
- l'applet de personnalisation est configurée pour générer des instructions de personnalisation (CMD2) en traitant l'au moins une commande de personnalisation ;
- l'applet de personnalisation est configurée pour envoyer les instructions de personnalisation (CMD2) à l'applet opérationnelle ; et
- l'applet opérationnelle est configurée pour effectuer une personnalisation du premier ensemble sur la base des instructions de personnalisation reçues de l'applet de personnalisation, rendant de ce fait opérationnelle l'utilisation de l'applet opérationnelle par ledit dispositif ;
ledit dispositif comprenant en outre une applet de gestion (9) configurée pour supprimer le deuxième ensemble lorsqu'il est détecté que la personnalisation est terminée,
dans lequel l'applet opérationnelle (AP1) et l'applet de personnalisation (AP2) sont configurées pour communiquer l'une avec l'autre à l'aide d'interfaces Java Card respectives mises en œuvre dans un troisième ensemble séparé des premier et deuxième ensembles par des pare-feux Java Card,
dans lequel le dispositif est configuré pour stocker, avant que l'applet opérationnelle ne reçoive la commande de personnalisation, lesdits premier, deuxième et troisième ensembles et former des pare-feux Java Card séparant chacun desdits premier, deuxième et troisième ensembles,
dans lequel ledit troisième ensemble comprend :
- une première interface Java Card (INT1) appelée par l'applet opérationnelle (AP1) pour transmettre l'au moins une commande de personnalisation (CMD1) à l'applet de personnalisation ;
- une deuxième interface Java Card (INT2) appelée par l'applet de personnalisation (AP2) pour envoyer les instructions de personnalisation (CMD2) à l'applet opérationnelle ; et
- une bibliothèque (LB) de cours publics accessible par l'applet de personnalisation et par l'applet opérationnelle.

13. Système comprenant un dispositif selon la revendication 12 pour commander le système, ledit système étant l'un quelconque de :
- un tachygraphe électronique ;
- un passeport électronique ; et
- une pièce d'identité électronique.
